# FASCICULE DE BREVET EUROPEEN

(11) **EP 1 769 653 B1**
(45) Date de publication et mention de la délivrance du brevet: **01.08.2018**
(21) Numéro de dépôt: 05783784.1
(22) Date de dépôt: 24.06.2005
(51) Int. Cl.: H04W 8/20, H04W 12/08

(54) **SYSTEME D'ACCES CONTROLE A DES INFORMATIONS CONTENUES DANS UN TERMINAL**
SYSTEM FÜR DEN GESTEUERTEN ZUGANG ZU INFORMATIONEN EINES ENDGERÄTS
SYSTEM FOR CONTROLLED ACCESS TO INFORMATION CONTAINED IN A TERMINAL UN TERMINAL

(30) Priorité: 09.07.2004 FR 0451484
(43) Date de publication de la demande: 04.04.2007
(73) Titulaire: Orange, 75015 Paris (FR)
(72) Inventeur: OULAHAL, Rachid, F-31100 Toulouse (FR)
(86) Numéro de dépôt international: PCT/FR2005/001614
(87) Numéro de publication internationale: WO 2006/016025

(56) Documents cités:
- EP-A- 1 193 587
- WO-A-98/52379
- WO-A-02/099556
- WO-A-03/030571
- WO-A-03/058994
- GB-A- 2 353 919
- US-A1- 2003 078 053

## Description

La présente invention concerne un système d'accès contrôlé à des informations contenues dans un terminal d'un abonné à un réseau de télécommunication. Elle concerne également un terminal contenant des informations à accès contrôlé, ainsi qu'un serveur de confidentialité d'un réseau de télécommunication.

L'invention trouve une application particulièrement avantageuse dans le domaine de la téléphonie mobile.

Actuellement, les terminaux mobiles peuvent contenir des informations dont les abonnés souhaitent pouvoir contrôler l'accès afin d'en limiter la diffusion. Ces informations ont le plus souvent un caractère personnel du fait qu'elles concernent généralement la vie privée de l'abonné.

Parmi ces informations susceptibles d'être soumises à un accès contrôlé, on peut citer la localisation géographique du terminal, mais aussi la disponibilité ou encore le carnet d'adresses de l'abonné.

Dans la suite de ce mémoire, l'invention sera présentée en référence au contrôle d'accès à la localisation géographique. Bien entendu, ce choix n'est pas limitatif et s'étend naturellement à tout autre type d'informations contenues dans le terminal que l'abonné entend soumettre à son contrôle.

Il existe aujourd'hui plusieurs moyens de localiser un terminal mobile dans le réseau de télécommunication.

Un premier moyen consiste à localiser le terminal par identification de la cellule dans laquelle il se trouve. Cette localisation est relativement grossière, aussi, pour l'affiner, on peut effectuer une triangulation mettant en jeu une pluralité de cellules voisines.

Un second moyen consiste à équiper le terminal d'un dispositif de localisation satellitaire, tel que le système GPS (« Geographical Positioning System »). Dans ce cas, la position du terminal est prise par référence à une pluralité de satellites et non pas par rapport au réseau de télécommunication lui-même. Ce système de localisation est précis mais lourd à mettre en oeuvre.

Le troisième moyen est mixte. Il s'agit d'une localisation par GPS assistée par le réseau en ce sens que le système GPS du terminal reçoit du réseau des informations de position approchée permettant d'accélérer la localisation par GPS.

Bien entendu, l'invention n'est pas limitée à l'un de ces trois moyens, mais s'étend également à toute autre technologie de localisation.

Les normes relatives à la localisation des abonnés à des réseaux de téléphonie mobile recommandent que l'accord de la personne localisée soit préalablement vérifié avant de fournir cette information de localisation à tout tiers qui en fait la demande. Le terme de « tiers » peut concerner une application, une personne physique ou morale, etc, qui nécessite la connaissance de la localisation géographique de l'abonné, par exemple un service fournissant une liste de lieux (restaurants, salles de cinéma,...) situés à proximité de l'endroit où se trouve l'abonné.

La demande internationale WO 02/099556 décrit un système d'accès sécurisé à des données personnelles.

La spécification 3GPP-TS 23.271 version 6.7.0 release 6 est un exemple de standard qui définit une architecture type destinée à la gestion des informations touchant la vie privée des abonnées, et en particulier leur localisation géographique lorsque celle-ci est établie par le réseau de télécommunication lui-même, conformément au premier moyen de localisation mentionné plus haut.

En substance, le standard précité prévoit la présence dans le réseau d'un serveur de confidentialité dans lequel sont stockées des conditions d'accès auxdites informations, définies par l'abonné dans ledit serveur de confidentialité. Ce serveur est également appelé PPR pour « Privacy Profile Register ».

On désigne par « conditions d'accès » aussi bien une autorisation d'accès à tout ou partie desdites informations que les modalités d'accès à tout ou partie de ces informations en cas d'autorisation.

Selon le standard 3GPP ci-dessus, lorsqu'une application demande au serveur de localisation dans le réseau de lui fournir la localisation d'un abonné, le serveur vérifie que cette application est bien autorisée à accéder à cette information. Pour ceci, il se base sur les conditions d'accès que l'abonné a préalablement définies dans le serveur de confidentialité. Si l'application est effectivement autorisée à connaître la localisation de l'abonné, alors le serveur de localisation localise effectivement l'abonné et communique le résultat à l'application qui l'a demandée.

Cependant, outre la situation qui vient d'être décrite relevant du standard 3GPP où le serveur d'informations (ici la localisation) et le serveur de confidentialité sont situés dans le réseau, il existe des cas où des serveurs équivalents sont implantés dans le terminal lui-même à l'initiative des constructeurs. On l'a vu précédemment pour le serveur de localisation relativement aux deuxième et troisième moyens de localisation qui se trouvent au moins en partie dans le terminal. Il en est de même pour le serveur de confidentialité qui peut être prévu d'origine intégré au terminal.

Cependant, cette solution, dite intégrée, présente le risque d'incohérence d'un terminal à l'autre du fait que le niveau des conditions d'accès aux informations peut varier selon le constructeur.

D'autre part, la coexistence de deux systèmes différents et indépendants d'accès contrôlé à certaines informations, dans le réseau et dans les terminaux, présente de nombreux inconvénients.

Tout d'abord, il faut remarquer que l'abonné doit gérer deux bases de données indépendantes, correspondant chacune à l'une ou l'autre des serveurs de confidentialité, ce qui suppose une duplication dans la saisie des conditions d'accès.

Ensuite, si l'abonné modifie une condition d'accès sur son terminal, celle-ci n'est pas prise en compte côté réseau, et inversement. Il en résulte une inhomogénéité dans la qualité de service. Si par exemple, l'abonné déclare sur le réseau qu'il ne veut pas recevoir de messages publicitaires localisés et qu'il a omis de le déclarer sur son terminal, il recevra néanmoins des messages de ce type de la part d'applications qui auront accès à la localisation via le terminal.

Enfin, du point de vue de l'opérateur, se pose le problème de sa responsabilité qui pourrait être invoquée même dans le cas où il n'est pas impliqué dans la chaîne de service, c'est-à-dire lorsque la gestion de l'accès aux informations relève du seul terminal.

Aussi, le problème technique à résoudre par l'objet de la présente invention est de proposer un système d'accès contrôlé à des informations contenues dans un terminal d'un abonné à un réseau de télécommunication, comprenant :
- dans le terminal, un serveur d'informations apte à fournir lesdites informations,
- dans le réseau, un serveur de confidentialité dans lequel sont stockées des conditions d'accès auxdites informations, définies par l'abonné dans ledit serveur de confidentialité,
qui permettrait de centraliser les conditions d'accès dans une seule base de données de manière à éviter la duplication de saisie desdites conditions et à assurer l'homogénéité de service.

La solution au problème technique posé consiste, selon la présente invention, en ce que ledit système comprend en outre, dans le terminal, un module de sécurité apte à recevoir du serveur de confidentialité lesdites conditions d'accès lors d'une première demande d'accès issue d'un tiers. Ainsi, comme on le verra en détail plus loin, les conditions d'accès aux informations sont centralisées dans une seule base de données, à savoir celle du serveur de confidentialité du réseau. Pour définir ces conditions, l'abonné entre en communication avec l'opérateur du réseau par le moyen le plus adapté. Celui-ci peut être, entre autres, un message court de type SMS, une page web ou WAP, ou encore une connexion de données de type GPRS, ou même lors de l'abonnement Il n'y a donc aucune nécessité de dupliquer ces informations de contrôle d'accès dès lors qu'elles ont été fournies au serveur de confidentialité du réseau.

Par ailleurs, le service est globalement homogène puisqu'indépendant des dispersions entre constructeurs concernant le niveau de confidentialité intégrée au terminal.

On observera également que le système d'accès contrôlé selon l'invention est particulièrement bien optimisé du fait qu'a la suite d'une première demande d'accès venant d'une application, les conditions d'accès associées à cette application sont transférées au module de sécurité du terminal qui alors, selon l'invention, assure la gestion de demandes d'accès ultérieures, tant que lesdites conditions d'accès restent valides, ce qui évite la consultation systématique du serveur de confidentialité du réseau à chaque demande d'accès ainsi qu'une surcharge du réseau.

Selon l'invention, ledit serveur de confidentialité est apte à mettre à jour automatiquement le module de sécurité lors d'une modification desdites conditions d'accès. On obtient de cette manière une synchronisation parfaite du module de sécurité du terminal par rapport au serveur de confidentialité du réseau.

L'invention prévoit également que ledit module de sécurité reçoit exclusivement les conditions d'accès lors d'une première demande d'accès ou lors d'une modification desdites conditions par l'abonné.

Enfin, conformément à l'invention, un terminal d'abonné à un réseau de télécommunication, contenant des informations à accès contrôlé, est notamment remarquable en ce que ledit terminal comprend un module de sécurité apte à recevoir d'un serveur de confidentialité dudit réseau des conditions d'accès auxdites informations lors d'une première demande d'accès auxdites informations issue d'un tiers. De même, selon l'invention, un serveur de confidentialité d'un réseau de télécommunication est notamment remarquable en ce qu'il est apte à fournir à un module de sécurité d'un terminal d'abonné audit réseau, contenant des informations à accès contrôlé, des conditions d'accès auxdites informations lors d'une première demande d'accès auxdites informations issue d'un tiers. La description qui va suivre en regard du dessin annexé, donné à titre d'exemple non limitatif, fera bien comprendre en quoi consiste l'invention et comment elle peut être réalisée.

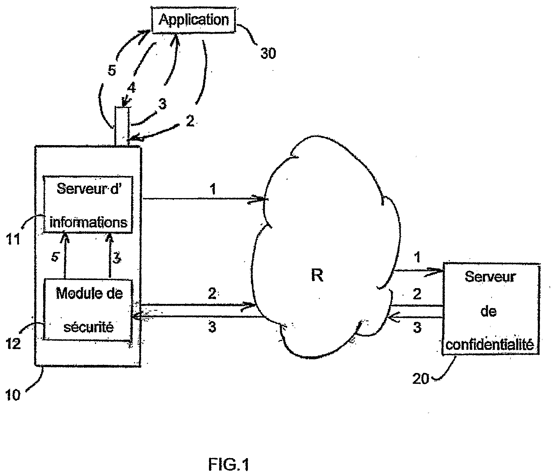

La figure 1 est un schéma d'un système d'accès contrôlé à des informations conforme à l'invention.

Sur la figure 1 est représenté un système d'accès contrôlé à des informations susceptibles d'être fournies par un serveur d'informations 11 d'un terminal 10 d'un abonné à un réseau R de télécommunication, tel qu'un réseau de téléphonie mobile. Les informations contenues dans le serveur 11 peuvent concerner la localisation géographique du terminal 10, le carnet d'adresses de l'abonné ou ses disponibilités, et plus généralement toutes informations dont l'abonné souhaite pouvoir contrôler l'accès vis-à-vis de tiers, notamment les applications 30 qui requièrent la connaissance de tout ou partie de ces informations. On notera que l'application peut être distante ou directement implémentée dans le terminal 10.

Dans une première étape identifiée par les flèches 1 sur la figure 1, l'abonné renseigne un serveur 20 de confidentialité dans le réseau R sur les conditions qu'il entend imposer aux tiers lors d'une demande d'accès à certaines informations contenues dans le serveur 11. L'ergonomie d'accès du terminal 10 au serveur 20 de confidentialité peut être quelconque et se présentera en général comme un formulaire à remplir (page web, message SMS, GPRS, etc).

Ces conditions d'accès sont constituées pour chaque tiers ou application, d'une part, d'une autorisation d'accès à tout ou partie des informations, et, d'autre part, en cas d'autorisation, des modalités d'accès à ces informations. Dans le cas d'informations de localisation par exemple, les modalités d'accès peuvent être les suivantes, ceci de manière non limitative :
- le nombre total de localisations successives autorisées,
- le temps pendant lequel la localisation peut avoir lieu,
- la précision de la localisation, supérieure à 100 m par exemple,
- la tranche horaire de localisation autorisée,
- le lieu de localisation autorisée, etc.

Ensuite, lors d'une première demande d'accès à des informations du serveur 11 provenant d'un tiers ou application 30, représentée par les flèches 2 de la figure 1, le terminal 10 transmet la demande au serveur 20 de confidentialité. En retour, comme indiqué par les flèches 3 de la figure 1, le serveur 20 informe le terminal 10 des conditions d'accès relatives à l'application 30 qui est à l'origine de la demande. Ces conditions sont stockées dans un module 12 de sécurité du terminal 10.

Ainsi, lors d'une demande d'accès ultérieure indiquée par la flèche 4, le terminal 10 interroge directement localement le module 12 de sécurité pour connaître les conditions d'accès de cette demande sans avoir à consulter à nouveau le serveur 20 de confidentialité sur le réseau R. Le terminal répond alors en conséquence (flèches 5) à cette demande d'accès, du moins tant que les conditions d'accès restent vérifiées.

Bien entendu, l'abonné peut à tout moment modifier les conditions d'accès qu'il a initialement imposées à tel tiers ou telle application. Pour cela, il s'adresse à nouveau au serveur 20 de confidentialité en utilisant la même ergonomie que précédemment et lui communique les nouvelles conditions d'accès. La mise à jour, ou synchronisation, du module 12 de sécurité est automatiquement et immédiatement effectuée par le serveur 20 pour prise en compte lors d'une nouvelle demande d'accès.

Si la demande d'accès émane d'une application dont aucune condition d'accès n'a été enregistrée dans le serveur 20 de confidentialité, ce dernier pourra alors retourner un formulaire à l'abonné pour définir les conditions qu'il entend imposer à cette application.

Il est également prévu que l'abonné puisse interdire l'accès directement sur son terminal, s'il le souhaite. Une simple interface dans le terminal 10 lui permet alors d'arrêter l'accès de l'application aux informations contenues dans le serveur 11. De même, cette simple interface dans le terminal doit permettre à l'utilisateur de modifier, de manière restreinte, les conditions d'accès. Dans ce cas, une synchronisation avec le serveur 20 de confidentialité sera déclenchée.

De préférence, le serveur 20 de confidentialité conservera un historique de toutes les communications de conditions d'accès qu'il aura effectuées vers le module 12 de sécurité.

## Revendications

1. Système d'accès contrôlé à des informations contenues dans un terminal (10) d'un abonné à un réseau (R) de télécommunication, comprenant:
- dans le terminal (10), un serveur (11) d'informations apte à fournir lesdites informations,
- dans le réseau (R), un serveur (20) de confidentialité dans lequel sont stockées des conditions d'accès auxdites informations, définies par l'abonné dans ledit serveur (20) de confidentialité,
**caractérisé en ce que** ledit système comprend en outre, dans le terminal (10), un module (12) de sécurité apte à recevoir du serveur (20) de confidentialité lesdites conditions d'accès lors d'une première demande d'accès issue d'un tiers.

2. Système selon la revendication 1, **caractérisé en ce que** ledit module (12) de sécurité reçoit les conditions d'accès lors d'une modification desdites conditions par l'abonné.

3. Système selon la revendication 1, **caractérisé en ce que** ledit module (12) de sécurité assure la gestion de demandes d'accès ultérieures, tant que lesdites conditions d'accès restent valides.

4. Système selon la revendication 2, **caractérisé en ce que** ledit serveur (20) de confidentialité est apte à mettre à jour automatiquement le module (12) de sécurité lors d'une modification desdites conditions d'accès.

5. Système selon l'une quelconque des revendications 1 à 4, **caractérisé en ce que** lesdites conditions d'accès comprennent une autorisation d'accès à tout ou partie desdites informations.

6. Système selon l'une quelconque des revendications 1 à 5, **caractérisé en ce que** lesdites conditions d'accès comprennent des modalités d'accès à tout ou partie desdites informations.

7. Système selon l'une quelconque des revendications 1 à 6, **caractérisé en ce que** la définition et la modification des conditions d'accès dans le serveur (20) de confidentialité sont effectuées sur le réseau (R) depuis le terminal (10) à travers un moyen de communication, avec synchronisation avec le serveur (20) de confidentialité.

8. Système selon l'une quelconque des revendications 1 à 6, **caractérisé en ce que** le terminal (10) dispose d'une interface d'interdiction directe d'accès auxdites informations.

9. Système selon la revendication 7, **caractérisé en ce que** ladite interface est également une interface de modification des conditions d'accès, avec synchronisation avec le serveur (20) de confidentialité.

10. Terminal d'abonné à un réseau (R) de télécommunication, contenant des informations à accès contrôlé, **caractérisé en ce que** ledit terminal (10) comprend un module (12) de sécurité apte à recevoir, lors d'une première demande d'accès auxdites informations issue d'un tiers, d'un serveur (20) de confidentialité dudit réseau (R) les conditions d'accès auxdites informations.

11. Terminal selon la revendication 10, **caractérisé en ce que** le module (12) reçoit les conditions d'accès lors d'une modification des conditions d'accès.

12. Terminal selon la revendication 10, **caractérisé en ce qu'**il comporte une interface d'interdiction d'accès auxdites informations.

13. Terminal selon la revendication 12, **caractérisé en ce que** ladite interface est également une interface de modification des conditions d'accès, avec synchronisation avec le serveur (20) de confidentialité.

14. Serveur de confidentialité d'un réseau (R) de télécommunication, **caractérisé en ce qu'**il est apte à fournir à un module (12) de sécurité d'un terminal (10) d'abonné audit réseau (R), contenant des informations à accès contrôlé, des conditions d'accès auxdites informations lors d'une première demande d'accès auxdites informations issue d'un tiers.

15. Serveur de confidentialité selon la revendication 14, **caractérisé en ce qu'**il est apte à fournir les conditions d'accès lors d'une modification des conditions d'accès.

## Patentansprüche

1. System für den gesteuerten Zugang zu Informationen, die in einem Endgerät (10) eines Teilnehmers in einem Telekommunikationsnetzwerk (R) enthalten sind, umfassend:
- in dem Endgerät (10) einen Informationsserver (11), der geeignet ist, die Information bereitzustellen,
- in dem Netzwerk (R) einen Vertraulichkeitsserver (20), in dem die Bedingungen für den Zugang zu den Information gespeichert sind, die von dem Teilnehmer in dem Vertraulichkeitsserver (20) definiert sind,
**dadurch gekennzeichnet, dass** das System ferner in dem Endgerät (10) ein Sicherheitsmodul (12) aufweist, das geeignet ist, von dem Vertraulichkeitsserver (20) die Bedingungen für den Zugang bei einer Zugangsanfrage, die von einem Dritten ausgegeben wird, zu empfangen.

2. System nach Anspruch 1, **dadurch gekennzeichnet, dass** das Sicherheitsmodul (12) die Bedingungen für den Zugang bei einer Änderung der Bedingungen durch den Teilnehmer empfängt.

3. System nach Anspruch 1, **dadurch gekennzeichnet, dass** das Sicherheitsmodul (12) das Verwalten von weiteren Zugangsanfragen gewährleistet, solange die Zugangsbedingungen gültig bleiben.

4. System nach Anspruch 2, **dadurch gekennzeichnet, dass** der Vertraulichkeitsserver (20) geeignet ist, das Sicherheitsmodul (12) bei einer Änderung der Zugangsbedingungen automatisch zu aktualisieren.

5. System nach einem der Ansprüche 1 bis 4, **dadurch gekennzeichnet, dass** die Zugangsbedingungen eine Zugangsberechtigung zu allen oder einem Teil der Informationen aufweisen.

6. System nach einem der Ansprüche 1 bis 5, **dadurch gekennzeichnet, dass** die Zugangsbedingungen Zugangsmodalitäten zu allen oder einem Teil der Informationen aufweisen.

7. System nach einem der Ansprüche 1 bis 6, **dadurch gekennzeichnet, dass** das Definieren und das Ändern der Zugangsbedingungen in dem Vertraulichkeitsserver (20) in dem Netzwerk (R) von dem Endgerät (10) über ein Kommunikationsmittel mit Synchronisierung mit dem Vertraulichkeitsserver (20) durchgeführt werden.

8. System nach einem der Ansprüche 1 bis 6, **dadurch gekennzeichnet, dass** das Endgerät (10) über eine Schnittstelle des direkten Zugangsverbots zu den Informationen aufweist.

9. System nach Anspruch 7, **dadurch gekennzeichnet, dass** die Schnittstelle ebenfalls eine Änderungsschnittstelle der Zugangsbedingungen mit Synchronisierung mit dem Vertraulichkeitsserver (20) ist.

10. Endgerät eines Teilnehmers in einem Telekommunikationsnetzwerk (R), das Informationen mit kontrolliertem Zugang enthält, **dadurch gekennzeichnet, dass** das Endgerät (10) ein Sicherheitsmodul (12) aufweist, das geeignet ist, bei einer ersten Zugangsanfrage zu den Informationen, die von einem Dritten ausgegeben wird, von einem Vertraulichkeitsserver (20) des Netzwerks (R) die Bedingungen für den Zugang zu den Information zu empfangen.

11. Endgerät nach Anspruch 10, **dadurch gekennzeichnet, dass** das Modul (12) die Zugangsbedingungen bei einer Änderung der Zugangsbedingungen empfängt.

12. Endgerät nach Anspruch 10, **dadurch gekennzeichnet, dass** es eine Schnittstelle des Zugangsverbots zu den Informationen aufweist.

13. Endgerät nach Anspruch 12, **dadurch gekennzeichnet, dass** die Schnittstelle ebenfalls eine Änderungsschnittstelle der Zugangsbedingungen mit Synchronisierung mit dem Vertraulichkeitsserver (20) ist.

14. Vertraulichkeitsserver eines Telekommunikationsnetzwerks (R), **dadurch gekennzeichnet, dass** es geeignet ist, einem Sicherheitsmodul (12) eines Endgeräts (10) eines Teilnehmers in dem Netzwerk (R), das Informationen mit kontrolliertem Zugang enthält, Zugangsbedingungen zu den Informationen bei einer ersten Zugangsanfrage zu den Informationen, die von einem Dritten ausgegeben wird, bereitzustellen.

15. Vertraulichkeitsserver nach Anspruch 14, **dadurch gekennzeichnet, dass** er geeignet ist, die Zugangsbedingungen bei einer Änderung der Zugangsbedingungen bereitzustellen.

## Claims

1. System for the controlled accessing of information contained in a terminal (10) of a subscriber to a telecommunications network (R), comprising:
- in the terminal (10), an information server (11) able to supply said information,
- in the network (R), a confidentiality server (20) in which there are stored conditions for accessing said information, defined by the subscriber in said confidentiality server (20),
**characterized in that** said system furthermore comprises, in the terminal (10), a security module (12) able to receive, from the confidentiality server (20), said access conditions upon a first access request originating from a third party.

2. System according to Claim 1, **characterized in that** said security module (12) receives the access conditions upon a modification of said conditions by the subscriber.

3. System according to Claim 1, **characterized in that** said security module (12) manages subsequent access requests as long as said access conditions remain valid.

4. System according to Claim 2, **characterized in that** said confidentiality server (20) is able to update the security module (12) automatically upon a modification of said access conditions.

5. System according to any one of Claims 1 to 4, **characterized in that** said access conditions comprise authorization of access to all or some of said information.

6. System according to any one of Claims 1 to 5, **characterized in that** said access conditions comprise methods for accessing all or some of said information.

7. System according to any one of Claims 1 to 6, **characterized in that** the definition and the modification of the access conditions in the confidentiality server (20) are performed on the network (R) from the terminal (10) through a communication means, with synchronization with the confidentiality server (20).

8. System according to any one of Claims 1 to 6, **characterized in that** the terminal (10) has an interface for preventing direct access to said information.

9. System according to Claim 7, **characterized in that** said interface is also an interface for modifying the access conditions, with synchronization with the confidentiality server (20).

10. Terminal of a subscriber to a telecommunications network (R), containing information with controlled access, **characterized in that** said terminal (10) comprises a security module (12) able to receive, upon a first request, originating from a third party, to access said information, from a confidentiality server (20) of said network (R), the conditions for accessing said information.

11. Terminal according to Claim 10, **characterized in that** the module (12) receives the access conditions upon a modification of the access conditions.

12. Terminal according to Claim 10, **characterized in that** it includes an interface for preventing access to said information.

13. Terminal according to Claim 12, **characterized in that** said interface is also an interface for modifying the access conditions, with synchronization with the confidentiality server (20).

14. Confidentiality server of a telecommunications network (R), **characterized in that** it is able to supply, to a security module (12) of a terminal (10) of a subscriber to said network (R), said terminal containing information with controlled access, conditions for accessing said information upon a first request, originating from a third party, to access said information.

15. Confidentiality server according to Claim 14, **characterized in that** it is able to supply the access conditions upon a modification of the access conditions.
